**Europäisches Patentamt**

**European Patent Office**

**Office européen des brevets**

(19)

(11) Veröffentlichungsnummer : **0 113 444**
**B1**

(12) **EUROPÄISCHE PATENTSCHRIFT**

(45) Veröffentlichungstag der Patentschrift :
05.03.86

(21) Anmeldenummer : 83112281.7

(22) Anmeldetag : 07.12.83

(51) Int. Cl.⁴ : **E 03 C   1/04**

(54) **Einlochmischbatterie.**

(30) Priorität : **11.12.82 DE 3245890**

(43) Veröffentlichungstag der Anmeldung :
**18.07.84 Patentblatt 84/29**

(45) Bekanntmachung des Hinweises auf die Patenterteilung : **05.03.86 Patentblatt 86/10**

(84) Benannte Vertragsstaaten :
**AT BE CH DE FR GB IT LI NL SE**

(56) Entgegenhaltungen :
**CH-A-    54 457**
**CH-A-    494 914**
**DE-A- 2 304 658**
**DE-U- 8 109 386**
**FR-A- 2 266 442**
**US-A- 3 421 540**

(73) Patentinhaber : **FRIEDRICH GROHE ARMATURENFA-BRIK GmbH & CO**
**Hauptstrasse 137**
**D-5870 Hemer 1 (DE)**

(72) Erfinder : **Humpert, Jürgen**
**Oberlinweg 18**
**D-5870 Hemer 1 (DE)**

## Beschreibung

Die Erfindung betrifft eine Mischbatterie mit den im Oberbegriff des Anspruchs 1 angegebenen Merkmalen.

Bei den bekannten Mischbatterien dieser Gattung wie CH-A-494 914 ist in der Regel ein Zentrierzapfen an dem Mischbatteriegehäuse ausgebildet, mit dem die Mischbatterie in der Öffnung an dem Wasch- oder Spültisch etc. fixiert wird. In diesem Zentrierzapfen sind außerdem meist in entsprechenden Aufnahmebohrungen kurze Kupferrohre wenigstens für den Anschluß an das Versorgungsleitungsnetz für Kalt- und Warmwasser eingelötet.

Der Erfindung liegt die Aufgabe zugrunde, die Befestigungsmittel und die Anschlußmontage der in dem Oberbegriff des Anspruchs 1 angegebenen Mischbatterie zu verbessern.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 6 angegeben.

Die durch die Erfindung erreichten Vorteile sind im wesentlichen darin zu sehen, daß der Fertigungsablauf der Mischbatterie vereinfacht werden kann, da die Anschlußrohre erst bei der Installation auf der Baustelle einzusetzen sind. Auch können sehr einfach die Anschlußrohre, wenn sie z. B. durch eine fehlerhafte Installation unbrauchbar geworden sind, durch neue ausgetauscht werden. Außerdem kann durch die erfindungsgemäße Befestigungsvorrichtung ein wesentlicher Teil des bisher benötigten Buntmetalls für das Batteriegehäuse eingespart werden und der kostenaufwendige Lötvorgang zur Befestigung der Rohre in dem Zentrierungsansatz kann entfallen. Schließlich werden durch die Möglichkeit, die Anschlußrohre nicht in der Werksmontage fest mit dem Batteriegehäuse zu verbinden, sondern erst bei der Installation auf dem Waschtisch an der Baustelle einzufügen, erhebliche Verpackungsvorteile erzielt, da die Anschlußrohre z. B. lose in den Karton etc. für die Mischbatterie als Beipack oder in separaten Verpackungen als Ersatz oder Ergänzungsteile gelegt werden können.

Ein Ausführungsbeispiel der Erfindung ist in der Zeichnung dargestellt und wird im folgenden näher beschrieben. Es zeigt

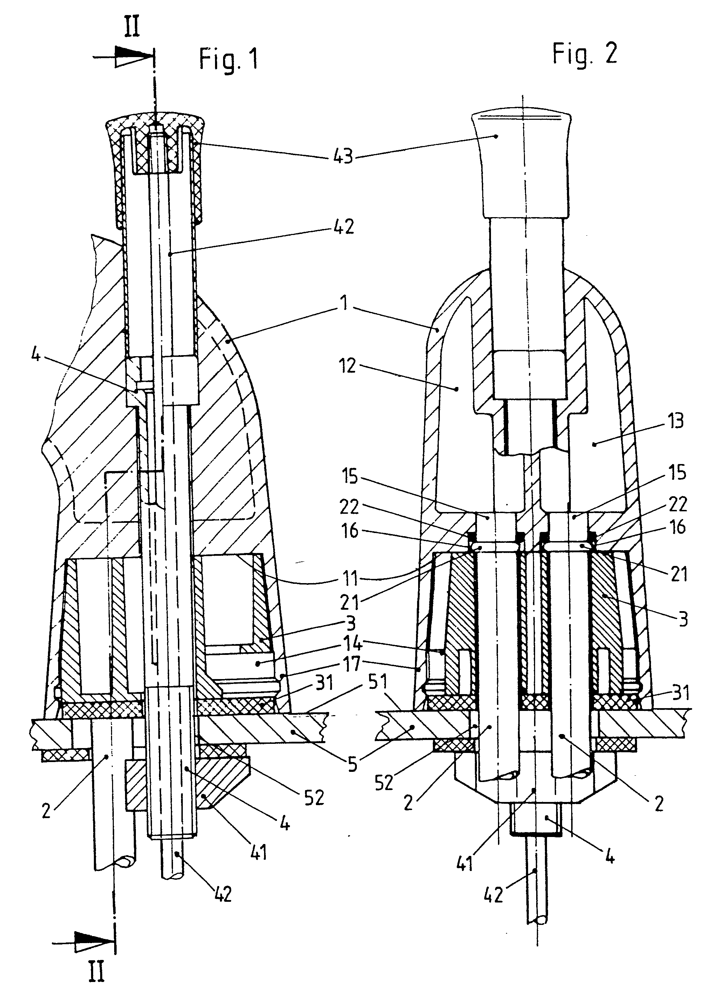

Figur 1 einen Befestigungsteil einer Einlochmischbatterie im Längsschnitt ;

Figur 2 den Befestigungsteil der Einlochmischbatterie gemäß Figur 1 in der Schnittebene II.

Die in der Zeichnung dargestellte Einlochmischbatterie kann sowohl als Eingriff-, Einhebelals auch als Zweioder Mehrgriffmischbatterie zur Erzeugung von Mischwasser und zur Regulierung der austretenden Gesamtwassermenge ausgelegt sein.

Der in der Zeichnung dargestellte Batterieteil zeigt dabei nur den Anschluß- und Befestigungsbereich der Einlochmischbatterie an einem Wasch- und Spültisch oder dergleichen.

An einem teilweise dargestellten Batteriegehäuse 1 ist eine Auflagestirnfläche 11 ausgebildet, in der je eine Durchtrittsbohrung 15 zur Verbindung mit einem Warmwasserkanal 12 und einem Kaltwasserkanal 13 in dem Batteriegehäuse 1 angeordnet ist. Die Durchtrittsbohrungen 15 sind so dimensioniert, daß sie die als Kupferrohre ausgebildeten Anschlußleitungen 2 satt aufnehmen können. Jedes Kupferrohr ist dabei mit einem nach außen gerichteten, durch einen Stauchvorgang erzeugten Flanschring 21 zur Axialsicherung und Abstützung eines Dichtungsrings 22 versehen. Zur Aufnahme dieses Rohrabschnitts sind die Durchtrittsbohrungen 15 von der Auflagestirnfläche 11 aus mit Aussenkungen 16 versehen, in denen der Dichtungsring 22 und der Flanschring 21 eingeschoben werden können.

Zur Axialsicherung der Anschlußleitungen 2 und der Halterung des Batteriegehäuses 1 ist an der Auflagestirnfläche 11 ein Formstück 3 in einem vom Batteriegehäuse 1 gebildeten Fortsatz 14 angeordnet, welches zur Befestigungsfläche 51 eines Wasch- oder Spültisches 5 mit einer elastischen Unterlegscheibe 31, z. B. aus Gummi, versehen ist. Das Formstück 3 kann z. B. aus Kunststoff gefertigt und mit leicht lösbarer Schnappverbindung oder durch einen Reibschluß der Unterlegscheibe 31 in dem Fortsatz 14 zur Installationserleichterung gehaltert sein. Zur Fixierung des Batteriegehäuses 1 und zur Sicherung der Anschlußleitungen 2 in ihrer Stecklage in den Durchtrittsbohrungen 15 ist durch das Batteriegehäuse 1 und das Formstück 3 ein Schraubbolzen 4 hindurchgeführt und mit einer an der Unterseite des Wasch-oder Spültisches 5 angeordneten Mutter 41 verschraubt. Der Schraubbolzen 4 ist hierbei als Hohlbolzen ausgebildet und trägt koaxial ein Gestänge 42 mit einem Betätigungsgriff 43 für ein Ablaufventil im Wasch- oder Spültisch. Die Anschlußleitungen 2 sowie der Schraubbolzen 4 mit dem Gestänge 42 sind durch eine Öffnung 52 in dem Wasch- oder Spültisch hindurchgeführt.

Die Montage der Mischbatterie kann in folgender Weise durchgeführt werden :

An dem Installationsort werden zunächst die Anschlußrohre 2 mit den Dichtungsringen 22 in die Durchtrittsbohrungen 15 eingeschoben und danach das Formstück 3 mit der Unterlegscheibe 31 über die Anschlußleitungen 2 in den Fortsatz 14 eingeschoben. Nunmehr wird der Schraubbolzen 4 in das Batteriegehäuse 1 eingefügt und die gesamte Mischbatterie mit den Anschlußleitungen 2 und dem Schraubbolzen 4 durch die Öffnung 52 des Wasch- oder Spültisches 5 hindurchgeschoben. Danach wird die unter dem Wasch- oder Spültisch 5 einzusetzende Mutter 41 durch Drehen des Schraubbolzens 4 von oben verschraubt, wobei die Mutter 41 so ausgelegt ist, daß ein Mitdrehen durch die Anschlußleitungen 2 verhindert ist. Im Hinblick auf den Fortsatz 14 des Batteriegehäuses 1 sind Formstück 3 und Unterlegscheibe 31 so dimensioniert, daß beim Festschraubvorgang die Unterlegscheibe 31 elastisch verformt wird, bis der Fortsatz 14 mit seinem Mantel 17 an der Stirnfläche an der Befestigungsfläche 51 des Wasch- oder Spültisches 5 sich aufsetzt und somit eine sichere Halterung des Batteriegehäuses 1 am Wasch- oder Spültisch 5 und der Anschlußrohre 2 im Batteriegehäuse 1 gewährleistet ist. Hiernach kann das Gestänge 42 in den Schraubbolzen 4 eingefügt werden und die Anschlußleitungen 2 mit den entsprechenden Versorgungsnetzen von Kalt- und Warmwasser verbunden werden. Bei den Anschlußarbeiten werden in der Regel die Anschlußleitungen 2 zur Anpassung an die individuellen Verhältnisse gebogen, wobei zweckmäßig die Mutter 41 so ausgebildet wird, daß ein Abknicken der Kupferrohre an den Waschtischkanten oder im Formstück 3 vermieden wird. Zu diesem Zweck kann z. B. die Mutter 41 mit separaten Führungsbohrungen mit verrundeten Kanten bzw. Teilen der Führungsbohrungen versehen sein.

## Patentansprüche

1. Mischbatterie für Wasch- und Spültische o. dgl., deren Batteriegehäuse an einer Öffnung (52) in der Waschtischbank etc. von einem gegen deren Unterseite anziehbaren Spannmittel gehaltert ist und die Zu- und/oder Abflußkanäle für Kalt-, Warm- und/oder Mischwasser durch die Öffnung geführt sind, das Batteriegehäuse (1) mit einer Auflagestirnfläche (11) versehen ist und die Kanäle als in das Batteriegehäuse (1) einsteckbare Anschlußleitungen (2) ausgebildet sind, dadurch gekennzeichnet, daß zur Sicherung der Anschlußleitungen (2) in ihrer Stecklage ein Formstück (3) zwischen Batteriegehäuse (1) und Befestigungsfläche (51) angeordnet ist, das mittels eines durch das Batteriegehäuse (1) und das Formstück (3) hindurchgeführten Schraubbolzens (4) und Verschraubung mit einer an der Unterseite des Wasch- und Spültisches (5) angeordneten Mutter (41) die Mischbatterie an der Installationsstelle fixiert.

2. Mischbatterie nach Anspruch 1, dadurch gekennzeichnet, daß die Auflagestirnfläche (11) am Grund eines topfartigen Fortsatzes (14) des Batteriegehäuses (1) ausgebildet ist und das Formstück (3) in den Fortsatz (14) versenkt eingelagert ist.

3. Mischbatterie nach den Ansprüchen 1 und 2, dadurch gekennzeichnet, daß die Anschlußleitungen (2) aus zylindrischem Metallrohr bestehen, an denen im Batterieanschlußbereich ein Flanschring (21) zur Aufnahme und axialen Anlage eines Dichtrings (22) vorgesehen ist, und jeweils der Flanschring (21) mit dem Rohr und dem Dichtring in einer entsprechend ausgebildeten Aussenkung (16) einer Durchtrittsbohrung (15) in der Auflagestirnfläche (11) einschiebbar und von dem Formstück (3) in der Stecklage gesichert ist.

4. Mischbatterie nach den Ansprüchen 1 bis 3, dadurch gekennzeichnet, daß das Formstück (3) von einer leicht lösbaren Schnappverbindung an oder in dem Batteriegehäuse (1) gehalten ist.

5. Mischbatterie nach den Ansprüchen 1 und 2, dadurch gekennzeichnet, daß der topfartige Fortsatz (14) so bemessen ist, daß nach dem Festschraubvorgang das Formstück (3) und eine beim Festschraubvorgang sich verformende elastische Unterlegscheibe (31) völlig vom Mantel (17) des Fortsatzes (14) umfaßt und der Mantel (17) mit seiner Stirnfläche an der Befestigungsfläche (51) aufgesetzt ist.

6. Mischbatterie nach den Ansprüchen 1 und 2, dadurch gekennzeichnet, daß der topfartige Fortsatz (14) von dem Mantelkörper eines den Batteriekörper umfassenden Schwenkauslaufrohres gebildet ist.

## Claims

1. Mixer tap for wash-hand basin or sink units or the like, the tap housing of which is held at an opening (52) in the wash-hand basin surround etc. by bracing means that can be tightened against its underside, the supply and/or outlet conduits for cold, hot and/or mixed water are passed through the opening, the tap housing (1) is provided with a support end surface (11) and the conduits are designed as connecting pipes (2) that can be inserted into the tap housing, characterised in that to secure the connecting pipes (2) in their inserted position a shaped part (3) is arranged between the tap housing (1) and the securing surface (51), which shaped part fixes the mixer tap at the installation point by means of a screw bolt (4) that passes through the tap housing (1) and the shaped part (3) and by screwing into a nut (41) arranged on the underside of the basin or sink unit (5).

2. Mixer tap according to claim 1, characterised in that the support end surface (11) is constructed on the base of a pot-like projection (14) on the tap housing (1) and the shaped part (3) is mounted, sunk-in, in the projection (14).

3. Mixer tap according to claims 1 and 2, characterised in that the connecting pipes (2) consist of cylindrical metal pipes on which there is provided, in the tap-connection area, a flange ring (21) for receiving and axially supporting a sealing ring (22), and in each case the flange ring (21), together with the pipe and the sealing ring, can be pushed into a correspondingly designed depression (16) in a drilled hole (15) in the support end surface (11) and is secured in its inserted position by the shaped part (3).

4. Mixer tap according to claims 1 to 3, characterised in that the shaped part (3) is held by an easily detachable snap connection on or in the tap housing (1).

5. Mixer tap according to claims 1 and 2, characterised in that the pot-shaped projection

**0 113 444**

(14) is of such dimensions that after the tight-screwing operation, the shaped part (3) and a washer (31), which deforms resiliently during the tight-screwing operation, are completely surrounded by the casing (17) of the projection (14) and the end face of the casing (17) is seated on the securing surface (51).

6. Mixer tap according to claims 1 and 2, characterised in that the pot-like projection (14) is formed by the casing of a swivelling outlet pipe that goes round the tap body.

**Revendications**

1. Robinet mélangeur pour lavabo ou évier ou analogues, dont le carter de robinet est maintenu contre une ouverture (52) de la portion horizontale du lavabo etc. par un moyen de bridage que l'on peut serrer contre la face inférieure de cette partie horizontale, robinet dont les conduites d'arrivée et/ou de départ pour l'eau froide, l'eau chaude et/ou l'eau mélangée passent à travers l'ouverture, dont le carter (1) présente une surface frontale d'appui (11) et dont les conduites sont conçues sous forme de conduites de raccordement (2) enfichables dans le carter de robinet (1), caractérisé en ce que pour bloquer les conduites de raccordement (2) dans leur position d'enfichage il est prévu entre le carter de robinet (1) et la surface de fixation (51) une pièce de forme (3) qui se fixe en position d'installation au moyen d'une tige filetée (4) qui passe à travers le carter de robinet (1) et la pièce de forme (3) et se visse dans un écrou (41) disposé contre la face inférieure du lavabo et de l'évier (5).

2. Robinet mélangeur selon la revendication 1, caractérisé en ce que la surface frontale d'appui (11) est prévue au fond d'un embout en forme de boisseau (14) du carter de robinet (1) ; et en ce que la pièce de forme (3) se met en place en s'enfonçant dans l'embout (14).

3. Robinet mélangeur selon les revendications 1 et 2, caractérisé en ce que les conduites de raccordement (2) sont des tubes métalliques cylindriques sur lequels est prévu, dans la zone de raccordement du robinet, un collet (21) pour la réception et l'appui axial d'une bague d'étanchéité (22) ; et en ce que chaque collet (21) peut s'enfiler, avec le tube et la bague d'étanchéité, dans un fraisage (16), de forme appropriée, d'un alésage traversant (15) de la surface frontale d'appui (11) et en ce qu'il est bloqué dans sa position d'enfichage par la pièce de forme (3).

4. Robinet mélangeur selon les revendications 1 à 3, caractérisé en ce que la pièce de forme (3) est maintenue contre ou sur le carter de robinet (1) par une liaison par clipsage facilement amovible.

5. Robinet mélangeur selon la revendication 1 et 2, caractérisé en ce que l'embout en forme de boisseau (14) est dimensionné de façon qu'après vissage à fond la pièce de forme (3) et une rondelle élastique (31) qui se déforme lors du processus de vissage à fond soient entièrement entourées par l'enveloppe (17) de l'embout (14) et que cette enveloppe (17) vienne s'appliquer, par sa surface frontale contre la surface de fixation (51).

6. Robinet mélangeur selon les revendications 1 et 2, caractérisé en ce que l'embout en forme de boisseau (14) est formé par la partie latérale d'un tube pivotant de puisage qui entoure le corps de robinet.

4

Fig. 1

Fig. 2